Europäisches Patentamt

European Patent Office

Office européen des brevets

(11) Numéro de publication: **0 506 164 A1**

## (12) DEMANDE DE BREVET EUROPEEN

(21) Numéro de dépôt: 92200646.5

(22) Date de dépôt: 05.03.92

(51) Int. Cl.⁵: **H04B 5/00**, H04L 12/18

(30) Priorité: **11.03.91 FR 9102908**

(43) Date de publication de la demande:
**30.09.92 Bulletin 92/40**

(84) Etats contractants désignés:
**BE DE DK ES GR IT NL**

(71) Demandeur: **NIEAF-SMITT B.V.**
**6, Vrieslantlaan**
**NL-3526 AA Utrecht(NL)**

(72) Inventeur: **Verduin, Cornelis Antonius**
**10, Van Rouwenoortstraat**
**NL-6721 TV Bennekom(NL)**

(74) Mandataire: **Timmers, Cornelis Herman**
**Johannes et al**
**EXTERPATENT B.V. P.O. Box 3241**
**NL-2280 GE Rijswijk(NL)**

(54) **Dispositif de commande à distance pour cadrans de vente aux enchères.**

(57) Le dispositif comporte une pluralité d'émetteurs (1O) et au moins un récepteur (2) relié au cadran à l'installation de vente, chaque émetteur comportant un générateur (11) d'une fréquence précise comprise entre 1 et 5OO kHz relié à un enroulement (7) d'émission, lequel enroulement (7) est séparé du générateur (11) et comporte des moyens (6) pour sa fixation sur l'utilisateur (4) mobile de l'émetteur, tandis que le récepteur (2) comporte un enroulement (13) de réception relié à un dispositif (14-19) de discrimination des fréquences reçues dont la sortie est reliée à la commande (20) d'un cadran (3).

FIG. 2

La présente invention concerne un dispositif de transmission à distance des ordres d'achat dans les ventes aux enchères à cadran.

Dans certaines ventes aux enchères, notamment celles concernant des denrées périssables telles que des fleurs ou des produits alimentaires, les acheteurs sont disposés derrière un pupitre qui leur offre un certain nombre de moyens de commande permettant de transmettre leurs ordres à une unité centrale de gestion de la vente. Cette unité centrale, outre les moyens informatiques et d'entrée sortie, comporte un cadran d'affichage successif du prix de chacun des lots mis en vente. Ce cadran est le moyen de visualisation de la variation du prix de vente que chaque acheteur peut arrêter lorsqu'il décide que le prix offert est acceptable. L'arrêt est donc transmis à la machine par les moyens de commande disponibles au pupitre.

Ces installations sont notamment utilisées dans les ventes aux enchères dites à la descente, c'est-à-dire que le prix offert pour un lot de marchandises décroît. C'est alors le premier ordre d'achat qui est retenu. Dans le cas où la variation du prix du lot est montante, c'est bien entendu le dernier ordre d'achat qui est retenu. L'installation comporte, de manière connue des moyens de discrimination des ordres reçus adaptés au type de vente à prix montant ou descendant.

Alors que ces installations connues sont réalisées dans des locaux fixes comportant une infrastructure adaptée à recevoir plusieurs centaines d'acheteurs et à déplacer les lots mis en vente pour les disposer à la vue des acheteurs, il est apparu récemment un besoin d'installations de vente mobiles pour pouvoir être disposées sur des marchés temporaires de moindre importance tels par exemple que les marchés de poissons à la criée dans de nombreux petits ports de pêche.

La principale contrainte que doit satisfaire ce type d'installation mobile réside dans sa possibilité d'être mise en oeuvre en l'absence totale d'infrastructure spécifique. Les lots mis en vente sont stationnaires et les acheteurs se déplacent autour de ceux-ci pour les examiner et déterminer leur choix.

Une installation mobile comporte donc une unité centrale déplaçable de manière automotrice ou tractée, possédant le ou les cadrans nécessaires à la vente, les moyens électroniques et informatiques associés à ces cadrans pour gérer chaque transaction réalisée et comprenant des moyens de réception de signaux provenant d'émetteurs mobiles affectés à chaque acheteur. La transmission des signaux est bien entendu sans fil.

Des expériences ont été menées dans ce sens en utilisant une technique VHF de transmission entre émetteurs et récepteurs c'est-à-dire des ondes métriques. Chaque émetteur utilise une fréquence commune d'émission, le signal étant constitué par une modulation de cette fréquence afin de le personnaliser. Le récepteur est unique et comporte un démodulateur pour identifier l'émetteur du signal reçu. Cette identification étant réalisée, le signal est appliqué aux circuits logiques de l'unité centrale pour d'une part agir sur le cadran et d'autre part agir sur un émetteur central d'un signal général de blocage des émetteurs individuels puisque, notamment dans l'hypothèse d'une vente à prix descendant, la transaction est réalisée et les ordres d'achat ultérieurs ne peuvent plus être pris en considération.

Les inconvénients principaux d'un tel système tiennent à l'utilisation d'un canal unique de transmission des signaux qui impose le codage du signal et donc son décodage à la réception.

Il s'ensuit un temps de traitement du signal à la réception car il faut assurer une grande sécurité à l'identification du signal. Ce temps de traitement aboutit au fait que l'appareil peut recevoir plusieurs signaux et les reconnaître avant de bloquer la transaction. On est alors dans l'incapacité d'attribuer le lot entre les acheteurs ayant émis leur ordre dans le laps de temps, de l'ordre de 1O millisecondes, écoulé entre la réception du premier signal et le blocage des émissions.

La présente invention entend remédier à ces inconvénients en proposant un dispositif de commande à distance sans fil du ou des cadrans d'une installation de vente aux enchères, sûr et fiable à l'abri de toute interférence entre les divers dispositifs, qui tient compte du fait que la distance maximale séparant chaque émetteur de l'installation centrale est inférieure à la centaine de mètres. Cette relative proximité entre émetteur et récepteur permet l'utilisation d'une transmission par couplage magnétique, c'est-à-dire par un signal dont la longueur d'onde est nettement supérieure à la distance séparant les émetteurs des récepteurs, de fréquence par exemple comprise entre 1 kHz et 5OO kHz.

Ainsi l'un des émetteurs de ce dispositif est constitué par un générateur d'une fréquence précise entre 1 et 5OO kH relié à un enroulement d'émission, lequel enroulement est séparé du générateur et comporte des moyens pour sa fixation sur l'utilisateur mobile de l'émetteur, tandis que le récepteur comporte un enroulement de réception relié à un dispositif de discrimination des fréquences reçues dont la sortie est reliée à la commande d'un cadran.

Dans un mode préféré de réalisation, l'enroulement émetteur est incorporé à un vêtement ou survêtement porté par l'utilisateur acheteur, tandis que le générateur de fréquence est placé dans un boîtier portant un bouton de commande.

Chaque générateur de fréquence engendre une fréquence déterminée différente de la fréquence de chacun des autres générateurs de l'installation. Le pas d'écartement des fréquences est de manière préférée de l'ordre de 300 Hz.

Le dispositif de discrimination comporte une pluralité de filtres en nombre au moins égal à celui des émetteurs mobiles de l'installation chacun d'eux étant passant pour la fréquence d'un seul émetteur et bloquant pour les autres fréquences, déterminant ainsi une pluralité de canaux d'entrée du récepteur.

D'autres avantages et caractéristiques de l'invention ressortiront de la description donnée ci-après d'un exemple de réalisation de l'invention.

Il sera fait référence aux dessins annexés dans lesquels :

- la figure 1 est une vue schématique générale d'une installation mobile de vente aux enchères comportant le dispositif selon l'invention,
- la figure 2 est un schéma fonctionnel simplifié de cette installation,
- la figure 3 est une représentation d'un mode de réalisation préféré d'un émetteur selon l'invention.

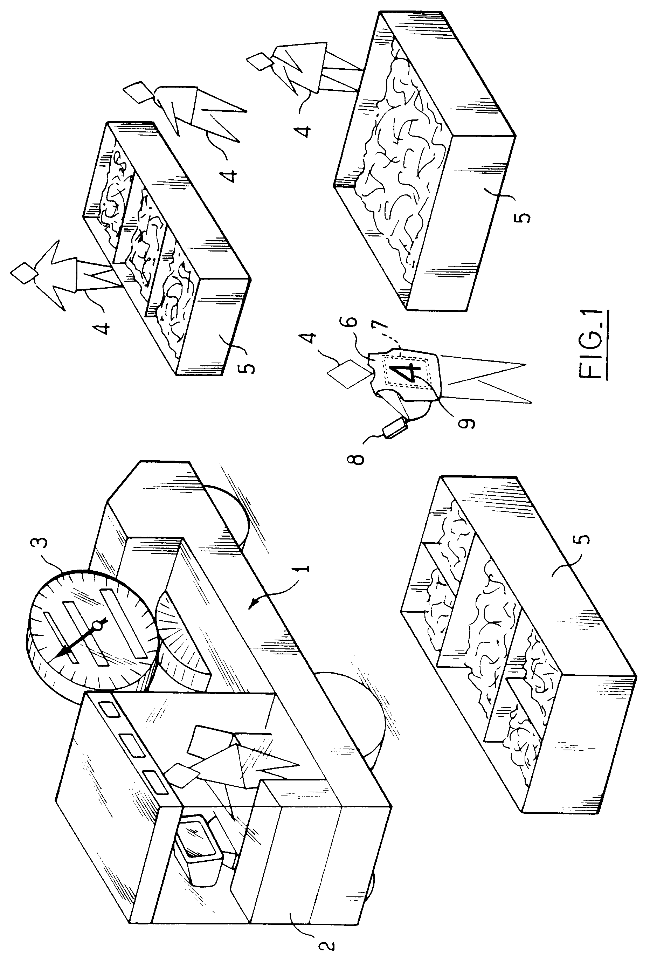

Très schématiquement représentée en figure 1, l'installation de vente aux enchères comporte une unité centrale mobile 1 (soit automobile, soit mobile par tractage, pourvue d'organes de roulement sur rail ou sur chaussée...) qui comporte une cabine 2 technique permettant à un opérateur (au moins) de gérer les ventes et un cadran 3 de visualisation du prix de chacun des lots et de sa variation au cours de la vente. Ce cadran ou l'unité centrale mobile, comporte par ailleurs d'autres écrans d'affichage ou de visualisation qui, reliés 3 l'informatique et l'électronique du système, complètent les informations délivrées à l'endroit des acheteurs.

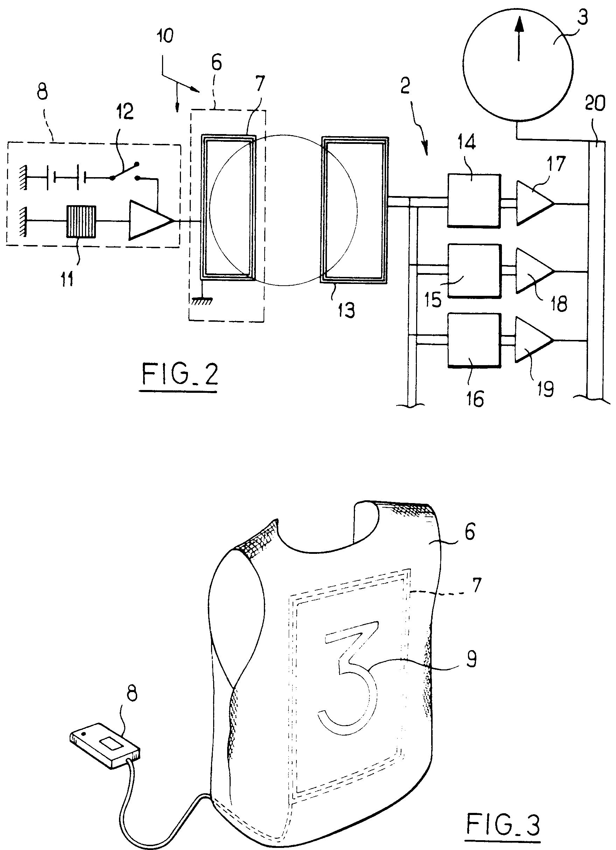

Les acheteurs 4 sont mobiles dans l'espace du marché qui comporte les stands (ou bacs ou analogues) 5 d'exposition des lots qui seront mis en vente pendant la séance. Chaque acheteur 4 est revêtu, dans le cas de l'exemple décrit, d'une sorte de gilet 6 (voir figure 3) qui constitue le moyen de support d'un enroulement émetteur 7 dont l'activation est commandée manuellement par le porteur du gilet, au moyen d'un boîtier 8 de commande manuelle (de petite dimension de manière à pouvoir être logé dans une poche) comportant un générateur d'une fréquence déterminée et relié à l'enroulement 7. Le boîtier 8 comporte également d'autres organes pour d'autres fonctions telles par exemple que la visualisation de l'état des batteries.

Bien entendu le vêtement support de l'enroulement pourrait être de tout autre nature sans pour autant sortir du cadre de l'invention (un brassard, une ceinture, un pantalon...) dans la mesure où il convient pour l'importance relative de l'enroulement qui doit émettre un champ électromagnétique relativement important pour qu'il soit, notamment, distingué des bruits environnants.

Par ailleurs, ce vêtement peut comporter un signe d'identification visible (un numéro 9 par exemple) qui permet au cours de la vente, à l'opérateur situé dans la cabine 2, de situer rapidement l'acheteur qui vient d'arrêter une transaction.

Un émetteur réalisé en forme de vêtement (ou survêtement) 6 présente d'autres avantages. Il constitue l'élément d'échange par lequel un acheteur peut s'inscrire à une vente et donc se faire connaître du responsable de celle-ci (notamment sur le plan des garanties financières). En effet, chaque acheteur sera contraint de revêtir cet émetteur et donc de le louer auprès du responsable. Des acheteurs habituels pourront acquérir leurs émetteurs définitivement. Il permet également de rendre discrète la manipulation du bouton de commande du boîtier et donc de pouvoir conserver à la vente un certain anonymat, ce qui est apprécié de certains acheteurs. Il permet enfin, par le signe d'identification visible qu'il porte, à l'opérateur de la vente de surveiller le déroulement de celle-ci et de contrôler l'absence d'anomalies.

La communication entre l'émetteur 10 et l'unité centrale 2 est illustrée schématiquement à la figure 2. L'émetteur comprend donc un bobinage 7 de couplage électromagnétique alimenté par un générateur 11 d'une fréquence déterminée (par exemple 10 kHz) logé dans le boîtier 8 qui comporte le bouton de commande 12. Le récepteur 2 possède un enroulement récepteur 13 dont la sortie débouche sur une série de filtres 14, 15, 16 en parallèle, chacun d'eux étant destiné à isoler une fréquence déterminée des signaux reçus par l'enroulement 13. Ainsi le filtre 14 sera passant pour la fréquence 10 kHz, le filtre 15 pour celle 10,3 kHz..., le pas de 300 Hz étant choisi également pour différencier un générateur 11 de fréquence d'un autre générateur 11 de fréquence d'un autre émetteur. La sortie de chaque filtre est amplifiée en 17, 18 et 19 pour être dirigée vers l'électronique 20 de commande du cadran 3.

On comprend que le signal émis par chaque émetteur peut se résoudre à une simple impulsion. Le signal n'a donc pas à être analysé et atteint immédiatement l'électronique 20 par un canal parfaitement identifié par le filtre correspondant. On sait donc quel est le signal qui a en premier atteint cette électronique et commandé l'arrêt du cadran. Les signaux suivants arrivant par un autre canal sont bloqués et/ou enregistrés, ce qui peut présenter un intérêt à des fins de maintenance de l'appareil du point de vue statistiques de fonctionnement.

La transmission dans des fréquences de l'ordre de 10 à 500 kHz présente de nombreux avantages. On ne constate, en effet, aucun phénomène de réflexion donc pas d'ondes réfléchies parasites. La stabilité de la propagation est grande et cette propagation est omnidirectionnelle. Sous réserve d'utiliser des émetteurs stables en fréquence et des filtres étroits, il est possible de disposer d'une installation avec de nombreux canaux d'entrée donc pouvant satisfaire des ventes relativement importantes.

**Revendications**

1. Dispositif de commande à distance sans fil du ou des cadrans (3) d'une installation (2) de vente aux enchères comportant une pluralité d'émetteurs (1O) et au moins un récepteur (2) relié au cadran à l'installation de vente, caractérisé en ce que chaque émetteur comporte un générateur (11) d'une fréquence précise comprise entre 1 et 5OO kHz relié à un enroulement (7) d'émission, lequel enroulement (7) est séparé du générateur (11) et comporte des moyens (6) pour sa fixation sur l'utilisateur (4) mobile de l'émetteur, tandis que le récepteur (2) comporte un enroulement (13) de réception relié à un dispositif (14-19) de discrimination des fréquences reçues dont la sortie est reliée à la commande (20) d'un cadran (3).

2. Dispositif selon la revendication 1 caractérisé en ce que l'enroulement émetteur (7) est incorporé à un vêtement (6) ou survêtement porté par l'utilisateur acheteur (4), tandis que le générateur de fréquence est placé dans un boîtier (8) portant un bouton (12) de commande manuelle.

3. Dispositif sleon l'une quelconque des revendications précédentes caractérisé en ce que chaque générateur (11) de fréquence engendre une fréquence déterminée différente de la fréquence de chacun des autres générateurs de l'installation.

4. Dispositif sleon l'une quelconque des revendications précédentes caractérisé en ce que le dispositif de discrimination comporte une pluralité de filtres (17-19) en nombre au moins égal à celui des émetteurs mobiles de l'installation, chacun d'eux étant passant pour la fréquence d'un seul émetteur et bloquant pour les autres fréquences, déterminant ainsi une pluralité de canaux d'entrée du récepteur (2).

5. Dispositif selon l'une quelconque des revendications 2 à 4, caractérisé en ce que le vêtement support ou l'enroulement émetteur comporte un signe (9) distinctif visuellement.

FIG.1

FIG. 2

FIG. 3

# RAPPORT DE RECHERCHE EUROPEENNE

Office européen des brevets

Numero de la demande

EP    92 20 0646

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | NL-A-8 105 543 (ARSYCOM B.V.)<br>* page 1, ligne 1 - ligne 26 * | 1 | H04B5/00<br>H04L12/18 |
| A | PATENT ABSTRACTS OF JAPAN<br>vol. 10, no. 285 (E-441)(2341) 27 Septembre 1986<br>& JP-A-61 103 326 ( SHIGEKI SAKURAI ) 21 Mai 1986<br>* abrégé * | 1,2 | |
| A | PATENT ABSTRACTS OF JAPAN<br>vol. 10, no. 39 (E-381)(2096) 15 Février 1986<br>& JP-A-60 194 640 ( HITACHI SEISHAKUSHO ) 3 Octobre 1985<br>* abrégé * | 1,3,4 | |
| A | GB-A-2 126 845 (ARF PRODUCTS INC.)<br>* page 6, colonne de gauche, ligne 25 - ligne 40; figures 6A,6B,6C,6D * | 2 | |

|  |  |  | DOMAINES TECHNIQUES RECHERCHES (Int. Cl.5) |
|---|---|---|---|
|  |  |  | H04B<br>H04L<br>G04F |

Le présent rapport a été établi pour toutes les revendications

| Lieu de la recherche | Date d'achèvement de la recherche | Examinateur |
|---|---|---|
| LA HAYE | 22 JUIN 1992 | BOSSEN M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P0402)